(19) Europäisches Patentamt
European Patent Office
Office européen des brevets

(11) **EP 1 779 087 B1**

(12) **FASCICULE DE BREVET EUROPEEN**

(45) Date de publication et mention
de la délivrance du brevet:
**01.09.2010 Bulletin 2010/35**

(21) Numéro de dépôt: **05791014.3**

(22) Date de dépôt: **21.07.2005**

(51) Int Cl.:
**G01N 11/16** *(2006.01)*

(86) Numéro de dépôt international:
**PCT/FR2005/001891**

(87) Numéro de publication internationale:
**WO 2006/018516 (23.02.2006 Gazette 2006/08)**

(54) **CELLULE DE MESURE DE PIEZORHEOMETRE ET PIEZORHEOMETRE CORRESPONDANT**

PIEZORHEOMETRISCHE MESSZELLE UND ENTSPRECHENDES PIEZORHEOMETER

PIEZO-RHEOMETRIC MEASURING CELL AND CORRESPONDING PIEZO-RHEOMETER

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.07.2004 FR 0408128**

(43) Date de publication de la demande:
**02.05.2007 Bulletin 2007/18**

(73) Titulaire: **Université de Strasbourg (Etablissement Public
National à Caractère Scientifique, Culturel et Professionnel)
67000 Strasbourg (FR)**

(72) Inventeurs:
• **MARTINOTY, Philippe**
  **F-67000 Strasbourg (FR)**
• **COLLIN, Dominique**
  **F-67118 Geispolsheim (FR)**

(74) Mandataire: **Nuss, Pierre et al
Cabinet Nuss
10 Rue Jacques Kablé
67080 Strasbourg Cedex (FR)**

(56) Documents cités:
**EP-A- 0 950 889     US-A- 3 194 064
US-A- 5 750 884**

• **PHYSICAL REVIEW LETTERS, vol. 45, no. 17, 27 octobre 1980 (1980-10-27), pages 1418-1421, XP002318931**
• **PHYSICAL REVIEW LETTERS, vol. 39, no. 21, 21 octobre 1977 (1977-10-21), pages 1346-1349, XP002318932**
• **MACROMOLECULES, vol. 32, no. 14, 1999, pages 4566-4574, XP002318946**

**Description**

La présente invention concerne le domaine des dispositifs et appareils de mesure de caractéristiques physiques et mécaniques de matériaux solides, liquides ou intermédiaires comme les gels et les élastomères, en particulier celles relatives à la rhéologie.

La présente invention a pour objet une cellule de mesure de piézorhéomètre améliorée, un appareil de mesure du type piézorhéomètre et un procédé de mesure mettant en oeuvre cet appareil.

On connaît déjà des piézorhéomètres de cisaillement ou de compression qui comprennent une cellule de mesure essentiellement constituée, d'une part, par deux lames porte-échantillon recevant entre elles l'échantillon solide, liquide ou de type intermédiaire à analyser, d'autre part, par des éléments céramiques piézolélectriques rapportés sur les faces des lames opposées aux faces en contact avec l'échantillon et, enfin, par un bâti formant boîtier et maintenant comprimé l'arrangement de lames et d'éléments céramiques. Un ou des élément(s) céramique(s) est(sont) lié(s) à l'une des deux lames ou lame émettrice et soumet(tent) celle-ci à des vibrations de cisaillement ou de compression sous l'action d'un signal d'excitation délivré par une chaîne d'alimentation et un ou des élément(s) céramique(s) est(sont) lié(s) à l'autre lame ou lame réceptrice et transforme(nt) les contraintes auxquelles cette dernière est soumise en un signal de mesure.

On peut ainsi définir un ou plusieurs élément(s) céramique(s) émetteur(s) ou d'émission et un ou plusieurs élément(s) céramique(s) récepteur(s) ou de réception.

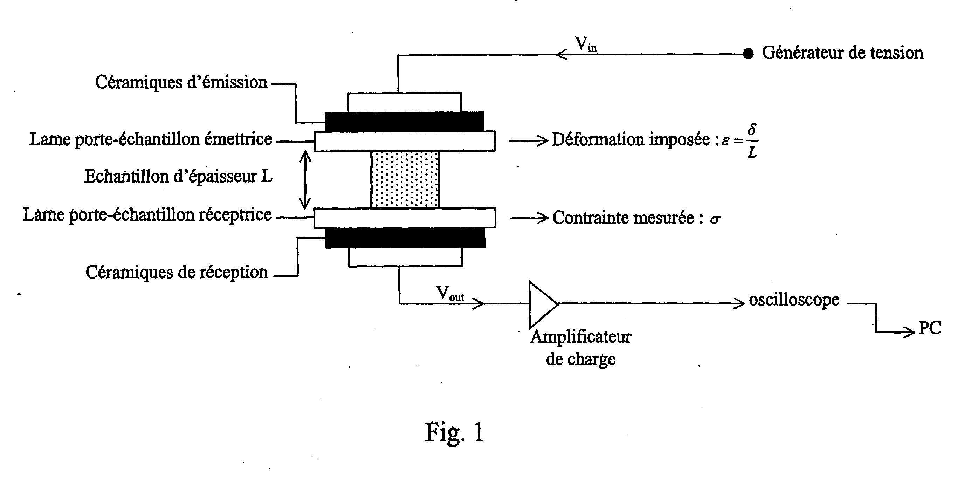

Un piézorhéomètre connu comprenant une cellule du type précité (avec un unique élément céramique par lame) est représenté sur la figure 1 des dessins annexés.

Deux exemples de mises en oeuvre d'un tel piézorhéomètre connu pour la détermination de caractéristiques de différents matériaux sont décrits dans les publications suivantes : "Influence of molecular parameters on the elastic and viscoelastic properties of side-chain liquid crystalline elastomers", J. J. Zanna et al., Macromolecules, Vol. 35, n° 14, pages 5459-5965, 2002 ; "Rheology of liquid crystalline elastomers in their isotropic and smectic A state", J. Weilepp, Macromolecules, Vol. 32, n° 14, pages : 4566-4574, 1999.

Un tel piézorhéomètre est, comme le montre la figure 1, un rhéomètre plan-plan travaillant, en fonction des types des éléments céramiques piézoélectriques utilisés, soit en cisaillement, soit en compression.

Son principe consiste, selon la première variante, à imposer une très petite déformation à un échantillon solide ou liquide au moyen d'une céramique piézoélectrique vibrant en cisaillement (c'est-à-dire dans une direction parallèle au plan du rhéomètre) et solidarisée à la lame porte-échantillon émettrice, et à mesurer l'amplitude et la phase de la contrainte transmise à travers l'échantillon avec une seconde céramique piézoélectrique solidarisée à la lame porte-échantillon réceptrice. Le rapport de la contrainte sur la déformation donne le module de cisaillement complexe $G = G' + iG''$ de l'échantillon (ou sa viscosité complexe $\eta = \eta' + i\eta''$). Un piézorhéomètre de ce type est connu du document PHYSICAL REVIEW LETTERS, vol. 45, n° 17, 27 octobre 1980, pages 1418-1421.

Dans le cas où les céramiques d'émission et de réception vibrent en compression (c'est-à-dire dans une direction perpendiculaire au plan du rhéomètre), le rapport de la contrainte sur la déformation donne soit la viscosité complexe dans le cas de fluides de faible viscosité (comme l'eau ou des substances biologiques) grâce à un facteur géométrique d'amplification, soit le module d'Young (E ou Z) dans le cas de solides mous, comme les gels ou les élastomères. Un piézorhéomètre de ce type est connu du document PHYSICAL REVIEW LETTERS, vol. 39, n° 21, 21 octobre 1977, pages 1346-1349.

L'échantillon est placé entre deux lames, par exemple de verre de silice, chacune des lames étant collée sur l'une des céramiques.

L'excitation de l'élément céramique piézoélectrique émetteur ou céramique émettrice est réalisée au moyen d'un signal à tension variable, par exemple sinusoïdale, délivré par un générateur de fonction ou analogue.

La tension variable est transformée par cet élément céramique ou céramique émettrice en déplacement $\delta$ qui est transmis à l'échantillon via la lame porte-échantillon émettrice. L'échantillon, d'épaisseur L, est alors soumis à une déformation $\varepsilon = \delta/L$ qui induit une contrainte $\sigma$ sur la céramique de réception. Cette contrainte crée des charges dans la céramique qui sont intégrées par un amplificateur de charge et transformées en une tension sinusoïdale. Les tensions d'entrée et de sortie, $V_{in}$ et $V_{out}$, ainsi que le déphasage $\varphi$ entre les deux signaux sont mesurées à l'aide d'un dispositif adapté, par exemple un oscilloscope équipé d'un module à transformer de Fourier. Ces informations sont transmises à un ordinateur de type PC (ordinateur personnel), programmé pour calculer le module de cisaillement complexe G.

La partie réelle G' et la partie imaginaire G'' du module de cisaillement complexe G sont données par :

$$G'(\omega) = \frac{L}{A_V d_{15}^2 S} \times \frac{V_{out}(\omega)}{V_{in}(\omega)} \times \cos\varphi(\omega)$$

$$G''(\omega) = \frac{L}{A_V d_{15}^2 S} \times \frac{V_{out}(\omega)}{V_{in}(\omega)} \times \sin\varphi(\omega)$$

Dans ces formules, S est la surface de l'échantillon en contact avec les lames, $A_V$ le gain de l'amplificateur de charge, et $d_{15}$ la constante piézoélectrique impliquée

Dans le cas de la compression, le rapport $Z = \sigma/\varepsilon$ est donné par :

$$Z'(\omega) = \frac{L}{A_V d_{33}^2 S} \times \frac{V_{out}(\omega)}{V_{in}(\omega)} \times \cos\varphi(\omega)$$

$$Z''(\omega) = \frac{L}{A_V d_{33}^2 S} \times \frac{V_{out}(\omega)}{V_{in}(\omega)} \times \sin\varphi(\omega)$$

Ces formules sont identiques aux formules précédentes, à l'exception de la constante piézoélectrique qui est maintenant $d_{33}$.

Il convient de noter que ces piézorhéomètres peuvent également fonctionner en utilisant des excitations de différentes formes: triangles, rampes, créneaux, etc.

Toutefois, dans le cadre de l'utilisation et de la mise en oeuvre du piézorhéomètre connu précité, les inventeurs ont constaté un certain nombre d'inconvénients et de limitations, restreignant l'application de ce type d'appareil, ainsi que la qualité et la fiabilité des mesures fournies.

Un inconvénient majeur constaté par les inventeurs est lié à l'existence d'un couplage électrostatique entre la céramique d'émission et la céramique de réception. Cet effet résulte de la très faible distance (généralement au plus de quelques millimètres) séparant ces céramiques et est à l'origine d'un signal rayonné parasite.

Par le document MACROMOLECULES, vol. 32, n° 14, 1999, pages 4566 - 4574, on connaît une cellule de mesure de piézorhéomètre selon le préambule de la revendication 1 et un piézorhéomètre intégrant une telle cellule. Une telle cellule permet de surmonter partiellement l'inconvénient précité.

Le but de l'invention est de proposer une solution permettant de réduire davantage, voire de pratiquement éliminer, le signal parasite précité et de permettre de différencier celui-ci du signal de mesure associé à la réponse mécanique de l'échantillon.

Ce but est atteint grâce aux caractéristiques de la partie caractérisante de la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

la figure 2 est une vue en coupe d'une cellule de mesure selon l'invention ;
la figure 3 est une vue de dessus d'une demi-coque faisant partie de la cellule représentée sur la figure 2 ;
la figure 4 est une représentation schématique d'un piézorhéomètre selon l'invention ;
les figures 5 et 6 représentent sous forme de courbes de variations en fonction de la fréquence les corrections respectivement de la phase et du gain de la chaîne de mesure faisant partie du piézorhéomètre selon l'invention ;

la figure 7 représente la courbe de détermination de la constance piézoélectrique d'un élément céramique de compression ;

la figure 8 est une vue en coupe, à une échelle différente, de lames porte-échantillon selon une variante de réalisation de l'invention ;

les figures 9A et 9B sont des représentations schématiques partielles d'arrangements de deux ensembles [céramiques/lame porte-échantillon] faisant partie d'une cellule de mesure selon l'invention, respectivement de mesure de cisaillement et de mesure de compression, montrant les polarisations des céramiques émettrices et réceptrices, et,

la figure 10 est une représentation schématique partielle d'un arrangement de deux ensembles [céramique/lame porte-échantillon] faisant partie d'une cellule de mesure de cisaillement selon une variante de l'invention.

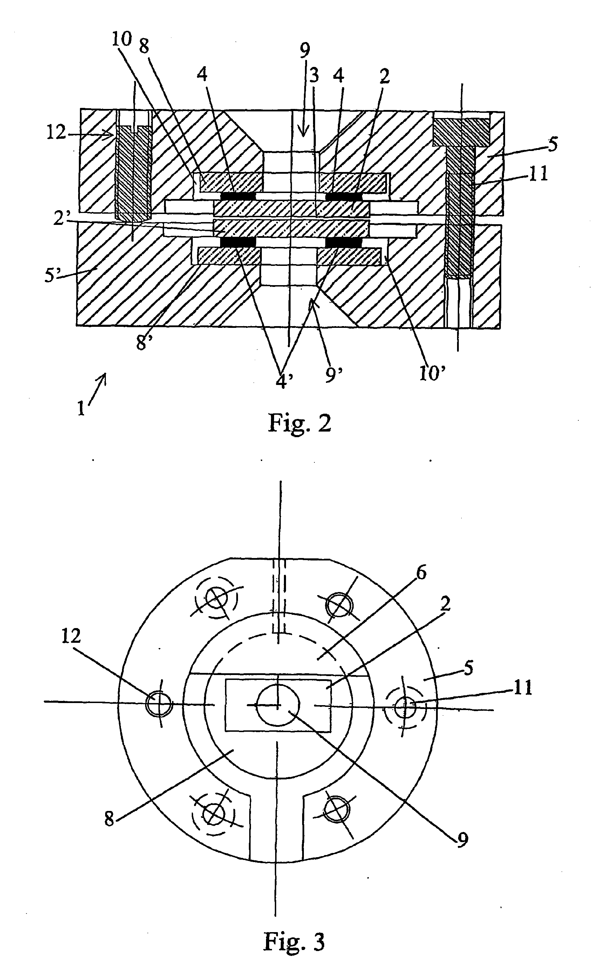

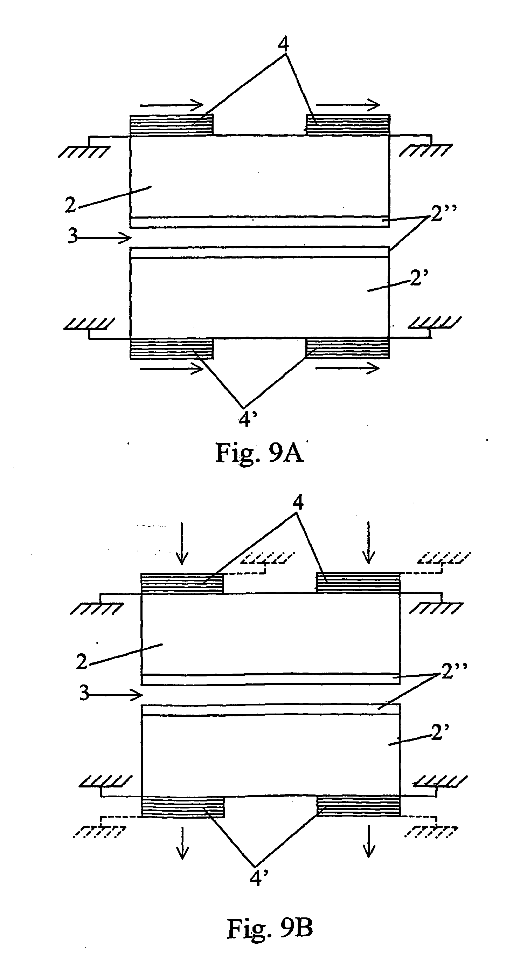

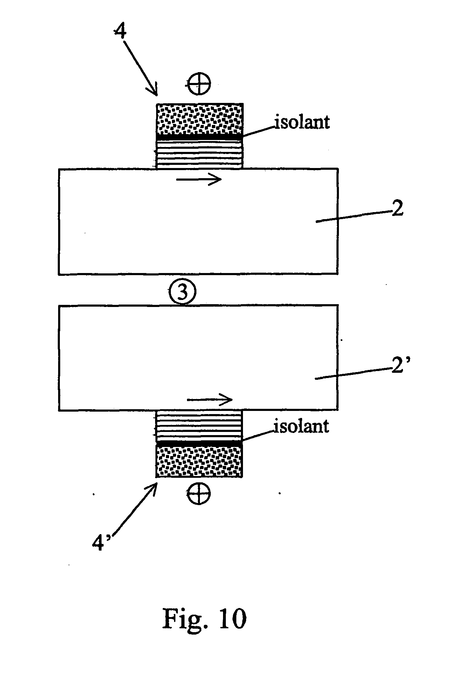

Comme le montre la figure 2 et partiellement les figures 9A, 9B et 10 des dessins annexés, la cellule de mesure 1 est essentiellement constituée, d'une part, par deux lames porte-échantillon 2 et 2' recevant entre elles l'échantillon 3 solide, liquide ou de type intermédiaire à analyser, d'autre part, par des éléments céramiques piézolélectriques 4 et 4' rapportés sur les faces des lames 2 et 2' opposées aux faces en contact avec l'échantillon 3 et, enfin, par un bâti 5, 5' maintenant comprimé l'arrangement de lames 2, 2' et d'éléments céramiques 4, 4', au moins un élément céramique 4, ci-après dénommé céramique émettrice, étant lié à l'une des deux lames ou lame émettrice 2 et soumettant celle-ci à des vibrations de cisaillement ou de compression sous l'action d'un signal d'excitation et au moins un élément céramique 4', ci-après dénommé céramique réceptrice, étant lié à l'autre lame ou lame réceptrice 2' et transformant les contraintes auxquelles cette dernière est soumise en un signal de mesure.

Les céramiques émettrice(s) et réceptrice(s) sont disposées de telle manière que les polarisations respectives de la céramique émettrice 4 et de la céramique réceptrice 4', ou les polarisations résultantes respectives des céramiques émettrices 4 et des céramiques réceptrices 4', sont parallèles et de même sens.

On comprend bien entendu que chacune des deux lames 2 et 2' peut être pourvue d'un unique élément céramique piézoélectrique 4 ou 4' comme représenté sur la figure 1, ou de plusieurs éléments 4 ou 4', en particulier deux éléments comme cela ressort de la figure 2 et des figures 9A et 9B.

De manière particulière, il peut être prévu que, dans le cas d'une cellule de mesure 1 travaillant en cisaillement, chaque élément céramique d'émission 4 et de réception 4' soit constitué par un empilement de deux céramiques présentant des directions de polarisation orthogonales dans le plan médian de ladite cellule de mesure 1, comme représenté sur la figure 10.

Un tel empilement de céramiques croisées à l'émission et à la réception permet de mesurer directement une anisotropie éventuelle du module de cisaillement complexe sur un même échantillon.

En vue d'écarter davantage les éléments céramiques émetteur(s) 4 et récepteur(s) 4' et donc de limiter le couplage électrostatique entre eux, il est prévu que les lames porte-échantillon 2, 2' présentent une épaisseur accrue, supérieure à celle nécessaire pour leur conférer une résistance et une rigidité suffisantes à leur fonction de maintien de l'échantillon 3.

En outre, pour réduire davantage encore le rayonnement parasite entre céramiques d'émission 4 et de réception 4', une ou des pièce(s) de blindage 6 destinée(s) à limiter le rayonnement électrostatique et le couplage électrostatique qui en résulte entre la ou les céramique(s) émettrice(s) 4 et la ou les céramique(s) réceptrice(s) 4' sont montée(s) dans le bâti 5, 5'.

Cette ou chaque pièce de blindage 6 destinée à réduire ou à supprimer le rayonnement et le couplage électrostatique qui en résulte consiste en une enveloppe, une plaque ou une lame métallique, disposée entre, d'une part, la lame émettrice 2 ou la lame réceptrice 2' et, d'autre part, le bâti 5, 5'. Cette ou ces pièoe(s) de blindage 6 s'étendra (ont) en particulier au-dessus du point d'alimentation en signal d'excitation des éléments céramiques 2 émetteurs.

En vue de permettre d'adapter la cellule de mesure 1 à la nature chimique de l'échantillon 3, l'une ou chacune des deux lames porte-échantillon 2 et 2' est pourvue, sur sa face tournée vers l'échantillon 3, d'une couche ou d'un revêtement 2", par exemple sous forme de lame de recouvrement additionnelle, rapporté(e) ou fixé(e) de manière amovible sur cette lame 2 et 2'.

Ces couches ou lames de recouvrement ("surlames") additionnelles peuvent par exemple être dissoutes ou se détacher (dissolution de la colle de fixation) lorsque la partie de coque 5 ou 5' correspondante est plongée dans un bain de solvant adéquat (ce solvant étant inerte vis-à-vis des autres liaisons entre les autres composants de la partie considérée).

Préférentiellement, les lames porte-échantillon 2 et 2' comportent au niveau de leurs faces, ou des faces des lames de recouvrement additionnelles 2", en contact avec l'échantillon 3 à analyser un traitement de surface empêchant ou favorisant le glissement de l'échantillon 3 ou orientant ce dernier au niveau desdites faces en contact avec ce dernier (par exemple des stries, des cannelures, des rugosités ou des traitements chimiques).

Ces faces peuvent donc être parfaitement définies en terme de caractéristiques et de propriétés, notamment en fonction de la nature de l'échantillon, du type d'analyse et de la ou des grandeur(s) ou paramètre(s) à mesurer.

Dans la plupart des cas, les faces des lames 2, 2' ou des lames additionnelles amovibles 2" rapportées sur ces dernières seront planes et plates.

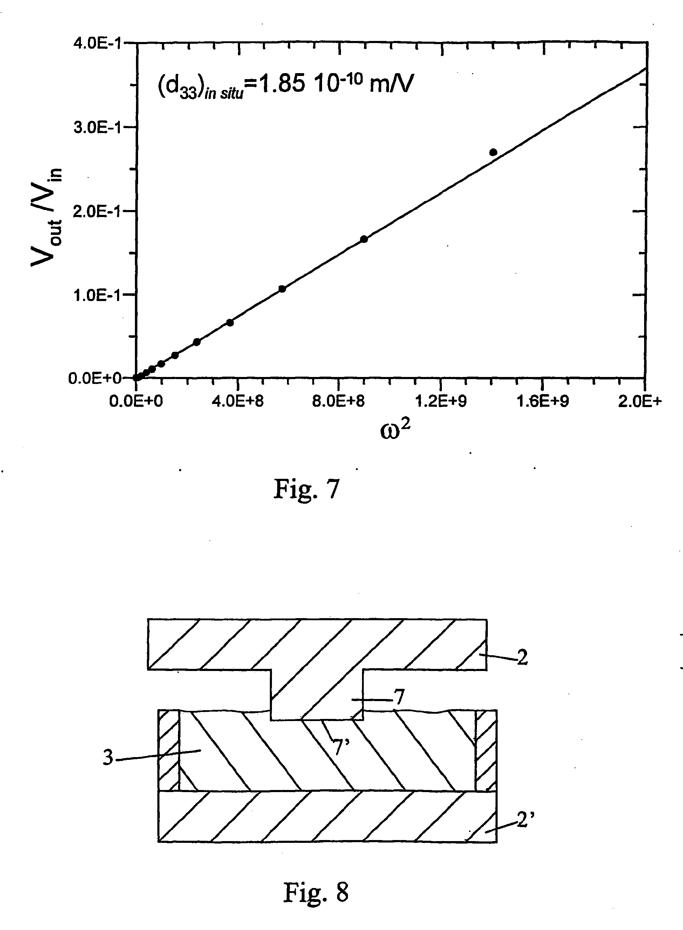

Néanmoins, conformément à une variante de réalisation représentée sur la figure 8, la lame porte-échantillon émettrice 2 présente au niveau de sa face en contact avec l'échantillon 3 une protubérance formant piston 7, la couche d'échantillon 3 située entre la face frontale 7' de la protubérance 7 et la face plane et plate de la lame porte-échantillon réceptrice 2' formant la partie d'échantillon analysée.

On aboutit ainsi à la réalisation d'une cellule 1 avec réservoir, avantageusement adaptée aux mesures en compression sur les systèmes aqueux (ou sur les systèmes présentant une évaporation rapide) et permettant de faire des mesures rhéologiques en s'affranchissant des enceintes à humidité contrôlée.

En outre, cette conformation particulière des lames 2, 2' de la cellule 1 permet de bénéficier des effets géométriques liés à la différence d'épaisseur sur la réponse mécanique au niveau de la réalisation physique de la mesure.

Afin d'obtenir une structure compacte avec des contacts intimes et rigides entre les différentes parties constituantes de la cellule de mesure 1, il est avantageusement prévu que les éléments céramiques piézoélectriques 4, 4' sont rapportés sur les lames porte-échantillon 2 et 2' respectives par collage ou soudure et assemblés chacune avec le bâti 5, 5' par collage ou soudure, éventuellement avec interposition d'une pièce 8 d'entretoisement et d'isolation électrique, la ou les colle(s) de liaison et d'assemblage conservant leur propriété adhésive et leur rigidité dans une plage de température de -60°C à +180°C, préférentiellement de -100°C à +200°C.

Pour permettre une prise en compte précise des variations de dimensions de la cellule 1 dans l'exploitation des signaux de mesure, le ou les matériau(x) de liaison et d'assemblage, le matériau constituant le bâti 5, 5' et, le cas échéant, le matériau constituant les pièces 8 d'entretoisement et d'isolation électrique, présentent tous des facteurs de dilatation/rétraction thermiques prédéterminées sensiblement de même valeur que le facteur de dilatation/ rétraction thermique du matériau constituant les lames porte-échantillon 2, 2', par exemple du verre.

En particulier, la rigidité des différents composants précités devra être supérieure à celle du matériau ou de la substance formant l'échantillon 3.

En effet, les mesures en fonction de la température supposent que la distance entre les lames porte-échantillon ou entrefer de la cellule 1 ne soit pas sensible aux variations de température, cette condition devant être vérifiée avant chaque excursion thermique et dépendant de l'adéquation entre les coefficients de dilatation des différents éléments constituant la cellule (colles ou soudure, bâti, lames porte-échantillon céramiques).

Selon une caractéristique très avantageuse de l'invention, ressortant des figures 2 et 3 des dessins annexés, l'ensemble formé par le bâti 5, 5' avec, montés en lui, les éléments céramiques piézoélectriques 2, 2', ainsi que, le cas échéant, la ou les pièce(s) de blindage 6 et/ou les pièces d'entretoisement et d'isolation électrique 8, présente une structure ajourée comportant deux ouvertures opposées 9 et 9' d'observation et d'irradiation de l'échantillon 3 s'étendant respectivement de l'extérieur du bâti 5, 5' jusqu'aux lames porte-échantillon 2, 2'.

Il sera ainsi possible, par exemple, d'observer l'échantillon 3 pendant la déformation imposée ou encore de soumettre de façon homogène l'ensemble de l'échantillon 3 à un rayonnement, par exemple ultra violet, permettant de suivre la réponse mécanique associée à la photo réticulation d'une solution (transition sol-gel), ainsi qu'éventuellement d'observer optiquement une réticulation se produisant sans le rayonnement U.V.

Conformément à un mode de réalisation pratique préférentiel ressortant de la figure 2 notamment, le bâti formant boîtier peut être composé de deux demi-coques 5 et 5' assemblées entre elles (de manière amovible et sous pression), constituant un logement de réception par coopération complémentaire de deux renfoncements 10, 10' recevant chacun, préférentiellement de manière calée, un arrangement lame porte-échantillon 2, 2'/élément(s) céramique(s) piézoélectrique(s) associé(s) 4, 4' et, éventuellement, une ou des pièce(s) de blindage 6 et/ou des pièces d'entretoisement et d'isolation électrique 8. Lesdites deux demi-coques 5 et 5' sont assemblées sous pression à l'aide de vis de serrage 11, plusieurs, préférentiellement trois, contrevis de réglage 12, avantageusement à déplacement micrométrique, étant prévues sur l'une des deux demi-coques 5 ou 5' en vue de l'ajustement du parallélisme entre les faces en regard de ces dernières et des cales d'espacement calibrées étant éventuellement disposées entre les faces en regard desdites deux demi-coques 5, 5' en fonction des épaisseurs des arrangements précités et de celle de l'échantillon 3 à analyser.

La ou les colles d'assemblage des différents composants peuvent consister en des colles époxy, le cas échéant chargés d'un métal (par exemple de l'argent) pour les rendre électriquement conductrices.

Comme cela ressort des figures 9A et 9B des dessins annexés, les éléments céramiques 4 et 4' peuvent être mis à la masse au niveau de leurs faces en contact avec la lame porte-échantillon 2, 2' correspondante, de même que les faces respectivement concernées desdites lames 2 et 2'.

A cet effet, les lames 2 et 2' peuvent comporter une piste conductrice pour une mise à la masse commune, permettant de réaliser des mesures avec absence de champ électrique au niveau de l'échantillon 3.

En variante, il est également possible de mettre les éléments céramiques 4 et 4' à la masse au niveau de leurs faces opposées à celles en contact avec les lames porte-échantillon 2, 2' respectives (indiqué à titre d'exemple en pointillé sur la figure 9B).

Dans cette variante, il sera possible d'effectuer des mesures avec application d'un champ électrique (par exemple analyse d'écoulement sous champ).

Il sera en outre possible de polariser les deux céramiques émettrices 4 en inverse l'une par rapport à l'autre, pour appliquer un signal d'excitation différentiel à l'échantillon.

L'invention a également pour objet un appareil de mesure, préférentiellement portatif, du type piézorhéomètre, comprenant une cellule de mesure recevant l'échantillon 3 à analyser et comportant des éléments céramiques piézoélectriques d'émission 4 et de réception 4', une chaîne d'alimentation 13 reliée fonctionnellement au(x) céramique(s) piézoélectrique(s) émettrice(s) ou d'émission 4 et une chaîne de mesure 13' reliée fonctionnellement au(x) céramique (s) piézoélectrique(s) réceptrice(s) ou de réception 4'. Cet appareil est essentiellement **caractérisé en ce que** la cellule de mesure consiste en une cellule de mesure 1 telle que décrite précédemment.

La chaîne d'alimentation 13 comprend par exemple un générateur 16 de signaux d'excitation alimentant, éventuellement par l'intermédiaire d'un moyen d'amplification 17, le ou les élément(s) céramique(s) émetteur(s) 4 et la chaîne de mesure 13' est essentiellement constituée par un moyen d'amplification 15 recevant les signaux délivrés par le ou les élément(s) céramique(s) récepteur(s) 4', la sortie dudit moyen 15 étant relié à une unité 18 de traitement et d'exploitation desdits signaux de mesure amplifiés, éventuellement après conversion, par exemple sous la forme d'une unité informatique, couplée ou non à un oscilloscope. Cette unité 18 pourra également intégrer des logiciels préprogrammés ou paramétrés permettant d'étalonner le piézorhéomètre et de compenser ou de corriger des dérives, des variations, des interférences ou analogues susceptibles d'influer sur les résultats de la mesure. Cette unité 18 pourra également gérer le fonctionnement de l'ensemble de l'appareil de mesure et être pourvue d'interfaces d'affichage, d'édition et de programmation.

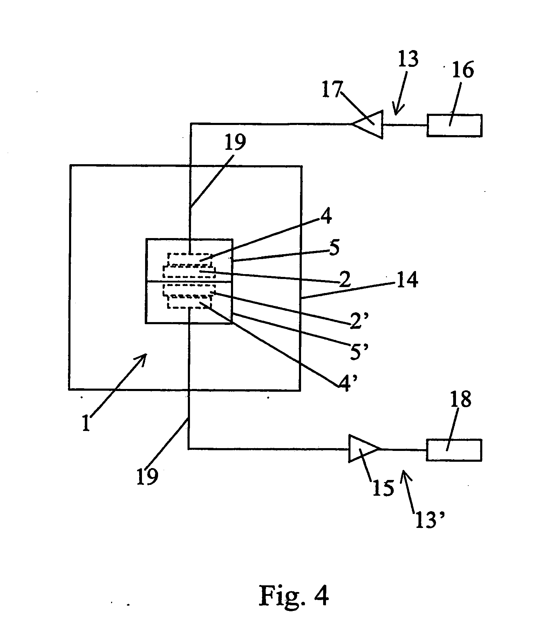

Afin de permettre des mesures rhéologiques sous pression, la cellule de mesure 1 est avantageusement disposée dans une enceinte fermée de manière étanche, préférentiellement en forme de caisson 14, dont la pression et la température internes peuvent être fixées ou variées de manière contrôlée dans des plages prédéfinies (Figure 4).

Ainsi, la réalisation d'une enceinte spécifique destinée à recevoir la ou les cellules 1 du piézorhéomètre, permet de faire des mesures de rhéologie sous des pressions de l'ordre de 1kbar et plus.

Selon une caractéristique de l'invention, ledit appareil de mesure du type piézorhéomètre comporte, d'une part, un moyen de compensation ou de correction du déphasage ou du décalage temporel parasite induit par les chaînes d'alimentation 13 et de mesure 13' en particulier par le moyen d'amplification 15 du signal de mesure délivré par le ou les second(s) élément(s) céramique(s) piézoélectrique(s) 4' solidaire(s) de la lame porte-échantillon réceptrice 2' et, d'autre part, un moyen de correction ou dé compensation des variations de gain desdites chaînes 13, 13', en particulier dudit moyen d'amplification 15, ce en fonction de la fréquence du signal d'excitation délivré par la chaîne d'alimentation 13.

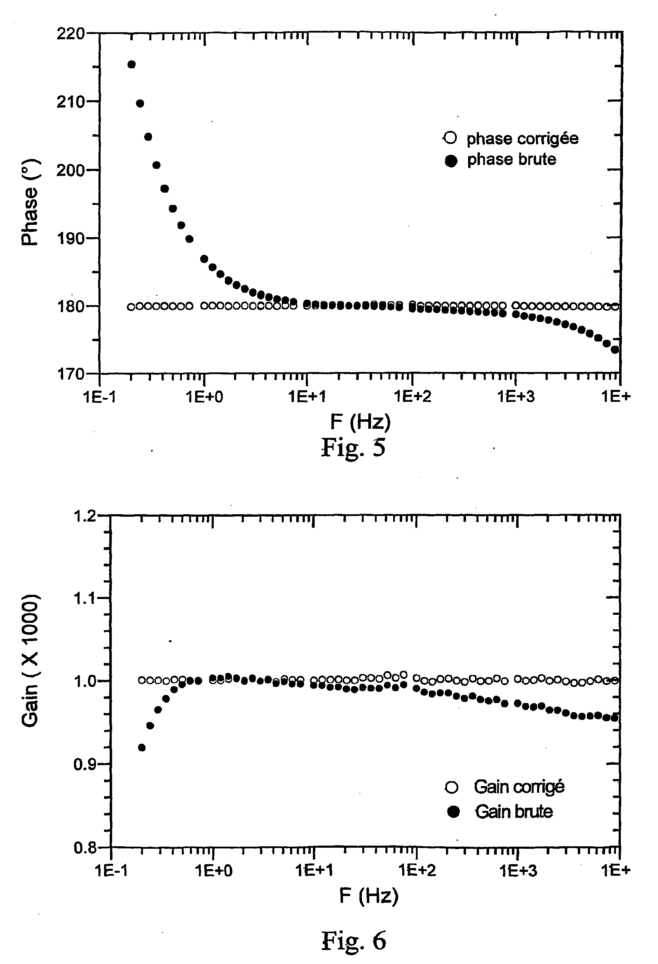

Ces moyens de correction et de compensation se présentent avantageusement sous la forme de moyens logiciels ou de calcul mis en oeuvre au niveau de l'unité 18, étalonnés dans une phase de calibrage préliminaire après détermination des dérives effectives en termes de gain et de phase de la chaîne d'alimentation 13 et de mesure 13' (voir les courbes des figures 5 et 6).

Enfin, l'invention a également pour objet un procédé de mesure de propriétés ou de caractéristiques physiques ou mécaniques d'échantillons de matériaux solides, liquides ou de type intermédiaire (par exemple gels et élastomères) au moyen d'un appareil tel que décrit ci-dessus.

Ce procédé est **caractérisé en ce qu**'il consiste, avant mise en oeuvre dudit appareil, à effectuer des opérations d'étalonnage et de calibrage préliminaires comprenant au moins l'une, préférentiellement plusieurs, des opérations suivantes :

- le réglage du parallélisme entre les lames porte-échantillon 2 et 2',
- le réglage de l'écartement entre les deux demi-coques 5, 5' constituant le bâti, en fonction notamment de l'épaisseur de l'échantillon 3 à analyser,
- la détermination et l'enregistrement de la fonction de variation de la phase entre signal d'excitation et signal de mesure en fonction de la fréquence,
- la détermination et l'enregistrement de la fonction de variation du gain des chaînes d'alimentation 13 et de mesure 13' en fonction de la fréquence,
- la détermination et l'enregistrement de la fonction de dilatation/rétraction thermique de la cellule de mesure 1,
- la détermination et l'enregistrement de la constante piézoélectrique des éléments céramiques 4, 4' solidarisés aux lames porte échantillon 2, 2'.

L'enregistrement des différentes données déterminées s'effectue au niveau de l'unité 18.

Le réglage du parallélisme pourra être réalisé soit à l'aide de cales calibrées, soit par interférométrie optique.

Dans le cas d'un liquide, la variation de l'épaisseur de la cellule de mesure 1 peut être réalisée soit :

- par des cales calibrées d'épaisseur décroissante (par exemple 100$\mu$m, 50$\mu$m et 20 $\mu$m) lorsque l'on sait à l'avance quelles sont les épaisseurs d'échantillon 3 que l'on veut étudier ;
- par des vis micrométriques qui permettent de faire varier de façon continue l'épaisseur de l'échantillon. Une cellule 1 utilisant ces vis présentent une réduction de la partie haute fréquence du domaine de fréquence utilisable, par suite d'une diminution de la rigidité du bâti de la cellule.

La détermination de la constante piézoélectrique de cisaillement ou de compression de chaque élément céramique 4, 4' se fait in situ, après collage dudit élément sur sa lame correspondante 2 ou 2'.

Cette détermination peut se faire au moyen d'un accéléromètre calibré à l'aide d'une lame vibrante entretenue par un moteur. Cet accéléromètre permet également de vérifier la direction de polarisation de l'élément céramique mesuré.

On décrit ci-dessus, de manière plus détaillée et en relation avec les figures 2, 3 et 4, un exemple de réalisation pratique d'une cellule de mesure 1 et d'un piézorhéomètre comprenant au moins une telle cellule selon l'invention.

Comme le montre la figure 2, une telle cellule 1 est essentiellement constituée de deux demi-coques ou demi-boîtiers 5 et 5' assemblés par des vis de serrage 11. Les céramiques piézoélectriques 4, 4' sont collées sur une rondelle en verre de silice 8, elle-même collée dans le logement 10, 10' de chaque demi-boîtier 5, 5'. Le rôle de cette rondelle 8 est d'isoler électriquement les céramiques du bâti en acier ou dans un matériau rigide conducteur similaire. Les lames porte échantillon 2, 2' sont collées sur l'autre face des éléments céramiques 4, 4'. Des câbles coaxiaux 19 permettent d'amener et de recevoir les signaux d'excitation et de réception ou de mesure. Une lame métallique 6, placée entre le bâti et les lames porte-échantillon a pour but de minimiser le rayonnement électrostatique dû au fait que les céramiques d'émission et de réception sont proches l'une de l'autre. Des contrevis de réglage 12, ou des vis micrométriques, permettent d'ajuster l'entrefer (distance entre les lames 2 et 2') de la cellule 1 (de la dizaine de micron au millimètre), le parallélisme entre les lames étant vérifié optiquement grâce aux ouvertures 9 et 9' s'étendant à travers les parties de boîtier 5, 5', l'élément 8 et entre les éléments céramiques 4, 4' (absence d'élément céramique au centre de la lame 2 ou 2').

Ces ouvertures 9 et 9' permettent également une mesure directe de l'épaisseur de l'échantillon à l'aide d'un micromètre, l'épaisseur des lames porte-échantillon étant préalablement déterminée. Elles permettent aussi soit d'observer directement l'échantillon 3, soit d'irradier celui-ci avec un rayonnement UV par exemple. La petite taille de la cellule de mesure 1 permet de la placer dans le champ optique d'un microscope, rendant ainsi possible une observation de l'échantillon à une échelle plus fine.

Le bâti 5, 5' de la cellule est généralement en acier invar mais il peut également être réalisé en d'autres matériaux comme l'inox ou le laiton pour les mesures sous champ magnétique. La cellule peut être placée dans un four (non montré sur la figure) qui permet d'effectuer des mesures entre - 60°C et 180°C. Le four est piloté par un régulateur thermique relié à l'unité 18 de gestion ou ordinateur, et la température de l'échantillon est mesurée par un thermomètre digital également connecté à l'ordinateur. Ces dispositions permettent une automatisation des expériences ; la température peut-être changée par paliers successifs, et, pour chaque température, les propriétés mécaniques de l'échantillon peuvent être déterminées en fonction de la fréquence.

Parmi les avantages de la cellule et du piézorhéomètre faisant état des différentes caractéristiques selon l'invention, on peut notamment citer non limitativement les suivants :

- La grande gamme de fréquence accessible ($10^{-2}$Hz-$10^4$Hz),
- La possibilité de faire varier l'épaisseur de l'échantillon de façon contrôlée entre $\sim 10\mu m$ et $\sim 100\mu m$,
- Les très faibles déformations imposées ($10^{-6}$-$10^{-3}$),
- Le contrôle des conditions limites sur les parois en contact avec l'échantillon (vitesse nulle ou différente de zéro),
- La possibilité d'étudier des matériaux orientés (cristaux liquides) en traitant les lames de verre avec un surfactant approprié,
- La possibilité d'observer optiquement la structure de l'échantillon pendant les mesures mécaniques,
- La possibilité d'irradier l'échantillon (photoréticulation par exemple), et de suivre un processus dé gélification,
- Les dimensions réduites de la cellule ($\varnothing = 6$ cm ; h = 3 cm) qui permettent de la placer dans un espace confiné (entrefer d'un électroaimant ; navette spatiale), ou d'en faire un rhéomètre de terrain,
- La faible quantité de produit nécessaire (<30 mg) qui permet d'étudier des substances biologiques,
- La possibilité d'étudier des solides mous (élastomères, gels) sous précompression statique,
- La possibilité de faire de la rhéologie sous pression (1 kbar),
- Le prix réduit pour un appareil fonctionnant sans la pression.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

**Revendications**

1. Cellule de mesure de piézorhéomètre de cisaillement ou de compression, essentiellement constituée, d'une part, par deux lames porte-échantillon (2, 2') recevant entre elles l'échantillon (3) solide, liquide ou de type intermédiaire à analyser, d'autre part, par des éléments céramiques piézolélectriques (4 et 4') rapportés sur les faces des lames opposées aux faces en contact avec l'échantillon et, enfin, par un bâti (5, 5') maintenant comprimé l'arrangement de lames et d'éléments céramiques,

   au moins un élément céramique (4), ci-après dénommé céramique émettrice, étant lié à l'une des deux lames ou lame émettrice et soumettant celle-ci à des vibrations de cisaillement ou de compression sous l'action d'un signal d'excitation et au moins un élément céramique (4'), ci-après dénommé céramique réceptrice, étant lié à l'autre lame ou lame réceptrice et transformant les contraintes auxquelles cette dernière est soumise en un signal de mesure, les céramiques émettrice(s) et réceptrice(s) étant disposées de telle manière que les polarisations respectives de la céramique émettrice (4) et de la céramique réceptrice (4'), ou les polarisations résultantes respectives des céramiques émettrices (4) et des céramiques réceptrices (4'), sont parallèles et de même sens,

   cellule (1) **caractérisée en ce que** :

   - les lames porte-échantillon (2, 2') présentent une épaisseur accrue, supérieure à celle nécessaire pour leur conférer une résistance et une rigidité suffisantes à leur fonction, et
   - ladite cellule (1) comprend une ou des pièce(s) de blindage (6), destinée(s) à limiter le rayonnement électrostatique et le couplage électrostatique qui en résulte entre la ou les céramique(s) émettrice(s) (4) et la ou les céramique(s) réceptrice(s) (4'), la ou chaque pièce de blindage (6) consistant en une enveloppe, une plaque ou une lame métallique, disposée entre, d'une part, la lame émettrice (2) ou la lame réceptrice (2') et, d'autre part, le bâti (5, 5'), et s'étendant au moins au-dessus du point d'alimentation en signal d'excitation de la ou des céramique(s) émettrice(s) (4).

2. Cellule de mesure selon la revendication 1, **caractérisée en ce que** l'une ou chacune des deux lames porte-échantillon (2 et 2') est pourvue, sur sa face tournée vers l'échantillon (3), d'une couche ou d'un revêtement (2"), par exemple sous forme de lame de recouvrement additionnelle, rapporté(e) ou fixé(e) de manière amovible sur cette lame (2 et 2').

3. Cellule de mesure selon l'une quelconque des revendications 1 et 2, **caractérisée en ce que** les lames porte-échantillon (2 et 2') comportent au niveau de leurs faces, ou des faces des lames de recouvrement additionnelles (2"), en contact avec l'échantillon (3) à analyser un traitement de surface empêchant ou favorisant le glissement de l'échantillon (3) ou orientant ce dernier au niveau desdites faces en contact avec ce dernier.

4. Cellule de mesure selon l'une quelconque des revendications 1 à 3, **caractérisée en ce que** la lame porte-échantillon émettrice (2) présente au niveau de sa face en contact avec l'échantillon (3) une protubérance formant piston (7), la couche d'échantillon (3) située entre la face frontale (7') de la protubérance (7) et la face plane et plate de la lame porte-échantillon réceptrice (2') formant la partie d'échantillon analysée.

5. Cellule de mesure selon l'une quelconque des revendications 1 à 4, **caractérisée en ce que** les céramiques (4, 4') sont rapportées sur les lames porte-échantillon (2 et 2') respectives par collage ou soudure et assemblées chacune avec le bâti (5, 5') par collage ou soudure, éventuellement avec interposition d'une pièce (8) d'entretoisement et d'isolation électrique, la ou les colle(s) de liaison et d'assemblage conservant leur propriété adhésive et leur rigidité dans une plage de température de -60°C à +180°C, préférentiellement de -100°C à +200°C.

6. Cellule de mesure selon la revendication 5, **caractérisée en ce que** le ou les matériau(x) de liaison et d'assemblage, le matériau constituant le bâti (5, 5') et, le cas échéant, le matériau constituant les pièces (8) d'entretoisement et d'isolation électrique, présentent tous des facteurs de dilatation/rétraction thermiques sensiblement de même valeur que le facteur de dilatation/ rétraction thermique du matériau constituant les lames porte-échantillon (2, 2'), par exemple du verre.

7. Cellule de mesure selon l'une quelconque des revendications 1 à 6, **caractérisée en ce que** l'ensemble formé par le bâti (5, 5') avec, montés en lui, les éléments céramiques piézoélectriques (2, 2'), ainsi que, le cas échéant, la ou les pièce(s) de blindage (6) et/ou les pièces d'entretoisement et d'isolation électrique (8), présente une structure ajourée comportant deux ouvertures opposées (9, 9') d'observation et d'irradiation de l'échantillon (3) s'étendant respectivement de l'extérieur du bâti (5, 5') jusqu'aux lames porte-échantillon (2, 2').

8. Cellule de mesure selon l'une quelconque des revendications 1 à 7, **caractérisée en ce que** le bâti formant boîtier est composé de deux demi-coques (5 et 5') assemblées entre elles, constituant un logement de réception par coopération complémentaire de deux renfoncements (10, 10') recevant chacun, préférentiellement de manière calée, un arrangement lame porte-échantillon (2, 2')/élément(s) céramique(s) piézoélectrique(s) associé(s) (4, 4') et, éventuellement, une ou des pièce(s) de blindage (6) et/ou des pièces d'entretoisement et d'isolation électrique (8), **en ce que** lesdites deux demi-coques (5 et 5') sont assemblées sous pression à l'aide de vis de serrage (11), plusieurs, préférentiellement trois, contrevis de réglage (12), avantageusement à déplacement micrométrique, étant prévues sur l'une des deux demi-coques (5 ou 5') en vue de l'ajustement du parallélisme entre les faces en regard de ces dernières et des cales d'espacement calibrées étant éventuellement disposées entre les faces en regard desdites deux demi-coques (5, 5') en fonction des épaisseurs des arrangements précités et de celle de l'échantillon (3) à analyser.

9. Cellule de mesure selon l'une quelconque des revendications 1 à 8, **caractérisée en ce que**, dans le cas d'une cellule de mesure (1) travaillant en cisaillement, chaque élément céramique d'émission (4) et de réception (4') est constitué par un empilement de deux céramiques présentant des directions de polarisation orthogonales dans le plan médian de ladite cellule de mesure (1).

10. Cellule de mesure selon l'une quelconque des revendications 1 à 9, **caractérisée en ce que** les éléments céramiques (4 et 4') sont mis à la masse au niveau de leurs faces en contact avec la lame porte-échantillon (2, 2') correspondante, de même que les faces respectivement concernées desdites lames (2 et 2').

11. Cellule de mesure selon l'une quelconque des revendications 1 à 9, **caractérisée en ce que** les éléments céramiques (4 et 4') sont mis à la masse au niveau de leurs faces opposées à celles en contact avec les lames porte-échantillon (2, 2') respectives.

12. Appareil de mesure, préférentiellement portatif, du type piézorhéomètre, comprenant une cellule de mesure recevant l'échantillon à analyser et comportant des éléments céramiques piézoélectriques d'émission et de réception, une chaîne d'alimentation reliée fonctionnellement au(x) céramique(s) piézoélectrique(s) émettrice(s) ou d'émission et une chaîne de mesure reliée fonctionnellement au(x) céramique(s) piézoélectrique(s) réceptrice(s) ou de réception, appareil **caractérisé en ce que** la cellule de mesure consiste en une cellule de mesure (1) selon l'une quelconque des revendications 1 à 11, et **en ce qu'**il comporte, en outre, d'une part, un moyen de compensation ou de correction du déphasage ou du décalage temporel parasite induit par les chaînes d'alimentation (13) et de mesure (13'), en particulier par le moyen d'amplification (15) du signal de mesure délivré par le ou les second(s) élément(s) céramique (s) piézoélectrique(s) (4') solidaire(s) de la lame porte-échantillon réceptrice (2') et, d'autre part, un moyen de correction ou de compensation des variations de gain desdites chaînes (13, 13'), en particulier dudit moyen d'amplification (15), ce en fonction de la fréquence du signal d'excitation délivré par la chaîne d'alimentation (13), étalonnés dans une phase de calibrage préliminaire après détermination des dérives effectives en termes de gain et de phase de la chaîne d'alimentation (13) et de mesure (13').

13. Appareil selon la revendication 12, **caractérisé en ce que** la cellule de mesure (1) est disposée dans une enceinte fermée de manière étanche, préférentiellement en forme de caisson (14) dont la pression et la température internes peuvent être fixées ou variées de manière contrôlée dans des plages prédéfinies.

14. Procédé de mesure de propriétés ou de caractéristiques physiques ou mécaniques d'échantillons de matériaux solides, liquides ou de type intermédiaire au moyen d'un appareil selon l'une quelconque des revendications 12 à 13, **caractérisé en ce qu'**il consiste, avant mise en oeuvre dudit appareil, à effectuer des opérations d'étalonnage et de calibrage préliminaires comprenant au moins l'une, préférentiellement plusieurs, des opérations suivantes :

- le réglage du parallélisme entre les lames porte-échantillon (2 et 2'),
- le réglage de l'écartement entre les deux demi-coques (5, 5') constituant le bâti, en fonction notamment de l'épaisseur de l'échantillon (3) à analyser,
- la détermination et l'enregistrement de la fonction de variation de la phase entre signal d'excitation et signal de mesure en fonction de la fréquence,
- la détermination et l'enregistrement de la fonction de variation du gain des chaînes d'alimentation (13) et de mesure (13') en fonction de la fréquence,
- la détermination et l'enregistrement de la fonction de dilatation/rétraction thermique de la cellule de mesure (1),
- la détermination et l'enregistrement de la constante piézoélectrique des éléments céramiques (4, 4') solidarisés aux lames porte échantillon (2, 2').

**Claims**

1. A shear or compression piezo-rheometric measuring cell, essentially consisting of, on the one hand, two sample holder plates (2, 2') that hold between them the solid, liquid or intermediate-type sample (3) to be analyzed, and, on the other hand, piezoelectric ceramic elements (4 and 4') relative to the faces of the plates that are opposite to the faces in contact with the sample, and, finally, a frame (5, 5') that keeps the arrangement of plates and ceramic elements compressed,

   at least one ceramic element (4), denoted hereinafter as the emitting ceramic, is connected to one of the two plates or emitting plate and subjects the latter to shear or compression vibrations under the action of an excitation signal, and at least one ceramic element (4'), denoted hereinafter as the receiving ceramic below, is connected to the other plate or receiving plate and transforms the constraints to which the latter is subjected into a measuring signal,

   the emitting ceramic(s) and receiving ceramic(s) are arranged in such a way that the respective polarizations of the emitting ceramic (4) and the receiving ceramic (4') or the respective resulting polarizations of emitting ceramics (4) and receiving ceramics (4') are parallel and in the same direction,

   said cell (1) being **characterized in that**

   - the sample holder plates (2, 2') have an increased thickness, greater than is necessary to give them sufficient resistance and rigidity to perform their function and,
   - said cell (1) comprises one or more shield parts (6) designed to limit the electrostatic radiation and the electrostatic coupling that results between the emitting ceramic(s) (4) and the receiving ceramic(s) (4'), the or each shield part (6) consisting of an envelope, a plate or a metal blade, arranged between, on the one hand, the emitting plate (2) or the receiving plate (2') and, on the other hand, the frame (5, 5') and extending at least above the feed point of the excitation signal of the emitting ceramic(s) (4).

2. Measuring cell according to claim 1, **characterized in that** the or each of the two sample holder plates (2 and 2') is provided, on its face turned toward the sample (3), with a layer or a coating (2"), for example in the form of an additional covering plate that is attached or fixed onto said plate (2 and 2') in a removable manner.

3. Measuring cell according to any of claims 1 and 2, **characterized in that** at the level of their faces or faces of the additional cover plates (2"), in contact with the sample (3) to be analyzed, the sample holder plates (2 and 2') comprise a surface treatment that prevents or promotes the sliding of the sample (3) or orients the latter at the level of said faces in contact with the latter.

4. Measuring cell according to any one of claims 1 to 3, **characterized in that** emitting sample holder plate (2) has a protuberance forming piston (7) at its face in contact with the sample (3), the sample layer (3) located between the front face (7') of the protuberance (7) and the smooth and flat face of the receiving sample holder plate (2') forms the analyzed sample portion.

5. Measuring cell according to any one of claims 1 to 4, **characterized in that** the ceramics (4, 4') are applied to the respective sample holder plates (2 and 2') by gluing or welding and are each assembled to the frame (5, 5') by gluing or welding, optionally with interposition of a part (8) for bracing and electrical insulation, the bonding and assembly adhesives preserving their adhesive property and their rigidity in a temperature range of - 60°C to +180°C, preferably -100°C to +200°C.

6. Measuring cell according to claim 5, **characterized in that** the material or materials for bonding and assembly, the material forming the frame (5, 5'), and, if necessary, the material that constitutes the parts (8) for bracing and electrical insulation all have thermal expansion/retraction factors that are essentially of the same value as the thermal expansion/retraction factor of the material that constitutes the sample holder plates (2, 2'), for example glass.

7. Measuring cell according to any one of claims 1 to 6, **characterized in that** the assembly formed by the frame (5, 5') with, mounted therein, the piezoelectric ceramic elements (2, 2'), as well as, if necessary, the shield part(s) (6) and/or the parts for bracing and electric insulation (8), has a perforated structure comprising two opposite openings (9, 9') for observation and irradiation of the sample (3) extending respectively from the outside of the frame (5, 5') up to the sample-holder plates (2, 2').

8. Measuring cell according to any one of claims 1 to 7, **characterized in that** the frame that forms a box is composed of two half-shells (5 and 5') assembled together, constituting a housing for receiving, by additional cooperation, two recesses (10, 10'), each of which holds, preferably in a clamped manner, a sample-holder plate (2, 2')/associated piezoelectric ceramic element(s) (4, 4') arrangement, and, optionally, one or more shield part(s) (6) and/or parts for bracing and electric insulation (8), wherein said two half-shells (5 and 5') are assembled under pressure by a tightening screw (11), several, preferably three, adjusting counter-screws (12), advantageously with micrometric adjustment control, being provided on one of the two half-shells (5 or 5') for the purpose of the adjustment of the parallelism between the faces opposite the latter and calibrated spacers optionally being placed between the faces opposite said two half-shells (5, 5') based on the thicknesses of the aforementioned arrangements and that of the sample (3) to be analyzed.

9. Measuring cell according to any one of claims 1 to 8, **characterized in that** in the case of a shear measuring cell (1), each ceramic element for emission (4) and for reception (4') consists of a stacking of two ceramics having orthogonal polarization directions in the median plane of said measuring cell (1).

10. Measuring cell according to any one of claims 1 to 9, **characterized in that** the ceramic elements (4 and 4') are grounded at their faces in contact with the corresponding sample holder plate (2, 2'), just like the respectively concerned faces of said plates (2 and 2').

11. Measuring cell according to any one of claims 1 to 9, **characterized in that** the ceramic elements (4 and 4') are grounded at their faces that are opposite to those in contact with the respective sample holder plates (2, 2').

12. Preferably portable, piezo-rheometric type measuring instrument, comprising a measuring cell receiving the sample to be analyzed and comprising piezoelectric ceramic elements for emission and for receiving, a feed chain that is functionally connected to emitting or emission piezoelectric ceramics and a measuring chain that is connected functionally to receiving or reception piezoelectric ceramics, instrument that is essentially **characterized in that** the measuring cell consists of a measuring cell (1) according to any of claims 1 to 11, and **in that** it also comprises on the one hand, a means for compensating for or correcting the phase shift or the parasitic time shift induced by the feed chains (13) and measuring chains (13'), in particular by the means for amplification (15) of the measuring signal delivered by the second piezoelectric ceramic element(s) (4') that is integral to the receiving sample holder plate (2'), and, on the other hand, a means for correcting or compensating for gain variations of said chains (13, 13'), in particular said amplification means (15) based on the frequency of the excitation signal delivered by the feed chain (13), standardized in a preliminary calibration phase after determining the effective drifts in terms of gain and phase of the feed (13) and measurement (13') chain.

13. Instrument according to claim 12, **characterized in that** the measuring cell (1) is placed in a closed chamber in a sealed manner, preferably in the form of a box (14), whose internal pressure and temperature can be fixed or varied in a controlled fashion within predefined ranges.

14. Process for measuring properties or physical or mechanical characteristics of samples of solid, liquid or intermediate-type materials by means of an instrument according to any of claims 12 to 13, **characterized in that** it consists, before using said instrument, in carrying out preliminary operations of standardization and calibration comprising at least one, preferably several, of the following operations:

   - the adjustment of the parallelism between the sample holder plates (2 and 2'),
   - the adjustment of the spacing between the two half-shells (5, 5') that constitute the frame, based in particular on the thickness of the sample (3) to be analyzed,
   - the determination and the recording of the variation function of the phase between excitation signal and measuring signal based on the frequency,
   - the determination and the recording of the variation function of the gain of the feed chains (13) and measuring chains (13') based on the frequency,
   - the determination and the recording of the thermal expansion/retraction function of the measuring cell (1),
   - the determination and the recording of the piezoelectric constant of the ceramic elements (4, 4') that are made integral with the sample holder plates (2, 2').

**Patentansprüche**

1. Piezorheometrische Zelle zur Scherungs- oder Kompressionsmessung, im Wesentlichen bestehend einerseits aus zwei Probenträgerplättchen (2, 2'), die zwischen sich die zu analysierende Probe (3) festen, flüssigen oder intermediären Typs aufnehmen, andrerseits aus piezoelektrischen Keramikelementen (4 und 4'), die an die Seiten der Plättchen angesetzt sind, die den Seiten entgegengesetzt sind, die mit der Probe in Kontakt stehen, und schließlich aus einem Rahmen (5, 5'), der

die Anordnung aus Plättchen und Keramikelementen komprimiert hält,

wobei mindestens ein Keramikelement (4), nachstehend Sendekeramik genannt, mit einem der zwei Plättchen oder Sendeplättchen verbunden ist und dieses unter der Wirkung eines Erregungssignals Scherungs- und Kompressionsvibrationen aussetzt, und mindestens ein Keramikelement (4'), nachstehend Empfangskeramik genannt, mit einem anderen Plättchen oder Empfangsplättchen verbunden ist und die Beanspruchungen, denen dieses Letztere ausgesetzt wird, in ein Messsignal umwandelt,

wobei die Sende- und Empfangskeramik(en) derart angeordnet sind, dass die jeweiligen Polarisationen der Sendekeramik (4) und der Empfangskeramik (4') oder die jeweiligen resultierenden Polarisationen der Sendekeramik (4) und der Empfangskeramik (4') parallel und gleichgerichtet sind,

Zelle (1), **dadurch gekennzeichnet, dass**:

- die Probenträgerplättchen (2, 2') eine erhöhte Dicke haben, die größer ist als die, die erforderlich ist, um ihnen eine Festigkeit und Steifigkeit zu verleihen, die für ihre Funktion ausreicht, und

- diese Zelle (1) ein oder mehrere Abschirmungsteil(e) (6) umfasst, die dazu bestimmt sind, die elektrostatische Strahlung und die elektrostatische Kopplung zu begrenzen, die zwischen der oder den Sendekeramik(en) (4) und der oder den Empfangskeramik(en) (4') auftritt, wobei das oder jedes Abschirmungsteil (6) aus einer Verkleidung, einer Platte oder einem Metallplättchen besteht, das zwischen dem Sendeplättchen (2) oder dem Empfangsplättchen (2') einerseits und dem Rahmen (5, 5') andrerseits angeordnet ist und mindestens über dem Einspeisepunkt der Sendekeramik(en) (4) mit dem Erregungssignal verläuft.

2. Messzelle nach Anspruch 1, **dadurch gekennzeichnet, dass** eines oder jedes der zwei Probenträgerplättchen (2 und 2') auf der der Probe (3) zugewandten Seite mit einer Schicht oder Ummantlung zum Beispiel in Form eines zusätzlichen Deckplättchens (2") versehen ist, das auf abnehmbare Weise an dieses Plättchen (2 und 2') angesetzt oder befestigt ist.

3. Messzelle nach einem der Ansprüche 1 und 2, **dadurch gekennzeichnet, dass** die Probenträgerplättchen (2 und 2') auf ihrer Seite oder auf der Seite des zusätzlichen Deckplättchens (2"), die mit der zu analysierenden Probe (3) in Kontakt ist, eine Oberflächenbehandlung aufweisen, die das Verrutschen der Probe (3) verhindert oder begünstigt oder Letztere auf dieser Seite in Kontakt damit orientiert.

4. Messzelle nach einem der Ansprüche 1 bis 3, **dadurch gekennzeichnet, dass** das Probenträgerplättchen (2) auf seiner Seite, die mit der Probe (3) in Kontakt ist, einen Vorsprung aufweist, der einen Kolben (7) formt, wobei die Probeschicht (3), die zwischen der Vorderseite (7') des Vorsprungs (7) und der planen und ebenen Seite des Probenträgerempfangsplättchens (2') liegt, den analysierten Probeabschnitt formt.

5. Messzelle nach einem der Ansprüche 1 bis 4, **dadurch gekennzeichnet, dass** die Keramiken (4, 4') durch Klebung oder Schweißung an die jeweiligen Probeträgerplättchen (2 und 2') angesetzt sind und alle durch Klebung oder Schweißung mit dem Rahmen verbunden sind, eventuell mit einem elektrisch isolierenden Zwischenstück (8), wobei der oder die Verbindungs- und Befestigungsklebstoffe ihre Haftfestigkeit und ihre Steifigkeit in einem Temperaturbereich von -60°C bis +180°C, bevorzugt von -100°C bis +200°C beibehalten.

6. Messzelle nach Anspruch 5, **dadurch gekennzeichnet, dass** das oder die Verbindungs- und Befestigungsmaterialien, das Material, aus dem der Rahmen (5, 5') besteht, und gegebenenfalls das Material, aus dem die elektrisch isolierenden Zwischenstücke (8) bestehen, alle Wärmedehnungs- und Wärmeschwindungskoeffizienten aufweisen, die im Wesentlichen den gleichen Wert haben wie der Wärmedehnungs- und Wärmeschwindungskoeffizient des Materials, aus dem die Probeträgerplättchen (2, 2') bestehen, zum Beispiel Glas.

7. Messzelle nach einem der Ansprüche 1 bis 6, **dadurch gekennzeichnet, dass** die Einheit, die aus dem Rahmen (5, 5') mit den darin montierten piezoelektrischen Keramikelementen (2, 2') sowie gegebenenfalls dem oder den Abschirmungsteil(en) (6) und oder den elektrisch isolierenden Zwischenstücken (8) geformt ist, eine durchbrochene Struktur mit zwei gegenüberliegenden Öffnungen (9, 9') zur Beobachtung und Bestrahlung der Probe (3) aufweist, die jeweils außerhalb des Rahmens (5, 5') bis zu den Probeträgerplättchen (2, 2') verlaufen.

8. Messzelle nach einem der Ansprüche 1 bis 7, **dadurch gekennzeichnet, dass** der gehäuseformende Rahmen aus zwei Halbschalen (5, 5') besteht, die zusammengebaut sind, wobei sie eine Aufnahme durch komplementäres Zusammenwirken von zwei Vertiefungen (10, 10') bilden, die jede bevorzugt auf versenkte Weise eine Anordnung aus Probeträgerplättchen (2, 2')/zugehörigen piezoelektrischen Keramikelement(en) (4,4') und eventuell ein oder mehrere Abschirmungsteil(e) (6) und/oder elektrisch isolierende Zwischenstücke (8) aufnehmen, und **dadurch**, dass diese zwei Halbschalen (5, 5') mithilfe einer Spannschraube (11) zusammendrückt werden, wobei mehrere, bevorzugt drei Justierkonterschrauben (12), bevorzugt mit mikrometerweiser Verstellung, auf einer der zwei Halbschalen (5 oder 5') vorgesehen sind, um die Anpassung der Parallelität zwischen den gegenüberliegenden Seiten Letzterer zu ermöglichen, und wobei abhängig von der Dicke der obigen Anordnungen und der der zu analysierenden Probe (3) eventuell kalibrierte Abstandsstücke zwischen den gegenüberliegenden Seiten dieser zwei Halbschalen (5 oder 5') angeordnet sind.

9. Messzelle nach einem der Ansprüche 1 bis 8, **dadurch gekennzeichnet, dass** im Falle einer Messzelle (1) zur Scherungsmessung jedes keramische Sende- (4) und Empfangselement (4') aus einem Stapel von zwei Keramiken besteht, die in der Medianebene dieser Messzelle (1) orthogonale Polarisationsrichtungen aufweisen.

10. Messzelle nach einem der Ansprüche 1 bis 9, **dadurch gekennzeichnet, dass** die Keramikelemente (4 und 4') an ihren Seiten, die mit dem entsprechenden Probeträgerplättchen (2 und 2') in Kontakt sind, masseverbunden sind, und auch die jeweils betroffenen Seiten dieser Plättchen (2 und 2').

11. Messzelle nach einem der Ansprüche 1 bis 9, **dadurch gekennzeichnet, dass** die Keramikelemente (4 und 4') an ihren Seiten, die denen entgegengesetzt sind, die mit den jeweiligen Probeträgerplättchen (2 und 2') in Kontakt sind, masseverbunden sind.

12. Messvorrichtung, bevorzugt tragbar, vom Typ Piezorheometer, umfassend eine Messzelle zur Aufnahme der zu analysierenden Probe, und umfassend piezoelektrische Sende- und Empfangskeramikelemente, eine Einspeisekette, die in Wirkbeziehung mit dem oder den piezoelektrischen Sende- und Empfangskeramikelement(en) verbunden ist, wobei die Vorrichtung **dadurch gekennzeichnet ist, dass** die Messzelle aus einer Messzelle (1) nach einem der Ansprüche 1 bis 11 besteht, und **dadurch**, dass sie außerdem einerseits ein Mittel zum Ausgleich oder zur Korrektur der unerwünschten Phasenverschiebung oder des Zeitversatzes, der durch die Einspeise- (13) und Messketten (13') verursacht wird, insbesondere durch das Mittel (15) zur Verstärkung des Messsignals, das vom oder von den zweiten piezoelektrischen Keramikelement(en) (4') abgegeben wird, das (die) mit dem Empfangsprobeträgerplättchen (2') verbunden ist (sind), und andrerseits ein Mittel zur Korrektur oder zum Ausgleich der Verstärkungsabweichungen dieser Ketten (13, 13'), insbesondere dieses Verstärkungsmittels (15), und dies in Abhängigkeit von der Frequenz des Erregungssignals, das von der Einspeisekette (13) abgegeben wird, die in einer Vorkalibrierungsphase nach Bestimmung der effektiven Verstärkungs- und Phasenabweichungen der Einspeise-(13) und Messkette (13') geeicht werden.

13. Vorrichtung nach Anspruch 12, **dadurch gekennzeichnet, dass** die Messzelle (1) in einem geschlossenen Gehäuse angeordnet ist, um dicht zu sein, bevorzugt in Form eines Kastens (14), dessen Innendruck und -temperatur auf kontrollierte Weise in vordefinierten Bereichen festgelegt oder variiert werden können.

14. Verfahren, um physikalische oder mechanische Eigenschaften von Proben aus Materialien festen, flüssigen oder intermediären Typs mithilfe einer Vorrichtung nach einem der Ansprüche 12 bis 13 zu messen, **dadurch gekennzeichnet, dass** es darin besteht, vor dem Gebrauch dieser Vorrichtung Eichoperationen und Vorkalibrierungen durchzuführen, die mindestens eine, bevorzugt mehrere der folgenden Schritte umfassen:

    - das Einstellen der Parallelität zwischen den Probeträgerplättchen (2 und 2'),
    - das Einstellen der Abstands zwischen den zwei Halbschalen (5, 5'), aus welchen der Rahmen besteht, insbesondere in Abhängigkeit von der Dicke der zu analysierenden Probe (3),
    - das Bestimmen und das Aufzeichnen der frequenzabhängigen Phasenänderungsfunktion zwischen dem Erregungssignal und dem Messsignal,
    - das Bestimmen und das Aufzeichnen der frequenzabhängigen Verstärkungsänderungsfunktion der Einspeise-(13) und Messketten (13'),
    - das Bestimmen und das Aufzeichnen der Wärmeausdehnungs-/Wärmeschwindungsänderungsfunktion der Messzelle (1),
    - das Bestimmen und das Aufzeichnen der piezoelektrischen Konstante der mit den Probeträgerplättchen (2, 2') verbundenen Keramikelemente (4, 4').

Générateur de tension

$V_{in}$

Céramiques d'émission

Lame porte-échantillon émettrice

Déformation imposée : $\varepsilon = \dfrac{\delta}{L}$

Echantillon d'épaisseur L

Lame porte-échantillon réceptrice

Contrainte mesurée : $\sigma$

Céramiques de réception

$V_{out}$

Amplificateur de charge

oscilloscope

PC

Fig. 1

Fig. 2

Fig. 3

Fig. 4

Fig. 5

Fig. 6

$(d_{33})_{in\ situ} = 1.85\ 10^{-10}\ m/V$

Fig. 7

Fig. 8

Fig. 9A

Fig. 9B

Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J. J. Zanna et al.** Influence of molecular parameters on the elastic and viscoelastic properties of side-chain liquid crystalline elastomers. *Macromolecules,* 2002, vol. 35 (14), 5459-5965
- **J. Weilepp.** Rheology of liquid crystalline elastomers in their isotropic and smectic A state. *Macromolecules,* 1999, vol. 32 (14), 4566-4574
- *PHYSICAL REVIEW LETTERS,* 27 Octobre 1980, vol. 45 (17), 1418-1421
- *PHYSICAL REVIEW LETTERS,* 21 Octobre 1977, vol. 39 (21), 1346-1349
- *MACROMOLECULES,* 1999, vol. 32 (14), 4566-4574